# EUROPÄISCHE PATENTANMELDUNG

(11) **EP 4 249 548 A1**
(43) Veröffentlichungstag der Anmeldung: **27.09.2023**
(21) Anmeldenummer: 23163881.8
(22) Anmeldetag: 23.03.2023
(51) Int. Cl.: C08J 11/28, C08J 11/24

(54) **VERFAHREN ZUR HERSTELLUNG VON POLYURETHANSCHAUMSTOFF-KÖRPERN UNTER ZURÜCKFÜHRUNG VON VERSCHNITT IN FORM EINES DEPOLYMERISATES**

(30) Priorität: 23.03.2022 DE 102022106914
(71) Anmelder: Performance Chemicals Handels GmbH, 21244 Buchholz (DE)
(72) Erfinder: Haubenreisser, Stefan, 21109 Hamburg (DE); Klockemann, Werner, 21244 Buchholz (DE)
(74) Vertreter: Müller Schupfner & Partner Patent- und Rechtsanwaltspartnerschaft mbB

(57) **Zusammenfassung**

Die vorliegende Erfindung betrifft ein Kreislaufverfahren zur Verwertung von Verschnitt aus der Herstellung von Polyurethanschaumstoff-Körpern umfassend die Depolymerisation des Verschnitts mittels eines Aminoalkohols als Spaltreagenz und die Rückführung eines Rezyklat-Gemisches in den Produktionsprozess, wobei das Rezyklat-Gemisch Polyole enthält, die zumindest teilweise mit den ursprünglich als Rohstoff eingesetzten Polyolen identisch sind und solchen, die diesen ähnlich sind, so dass das Verfahren die Herstellung in ihren physikalischen Eigenschaften einheitlichen Polyurethanschaumstoff-Körper ermöglicht, egal ob der Produktionsprozess das Rezyklat-Gemisch als Einsatzstoff enthält oder in bestimmten Produktionsphasen nicht enthält.

## Beschreibung

Gegenstand der Erfindung ist ein Kreislaufverfahren zur Verwertung von Verschnitt aus der Herstellung von Polyurethanschaumstoff-Körpern umfassend die Depolymerisation des Verschnitts mittels eines Aminoalkohols als Spaltreagenz und die Rückführung eines Rezyklat-Gemisches in den Produktionsprozess, wobei das Rezyklat-Gemisch Polyole enthält, die zumindest teilweise mit den ursprünglich als Rohstoff eingesetzten Polyolen identisch sind und solchen, die diesen ähnlich sind, so dass das Verfahren die Herstellung in ihren physikalischen Eigenschaften einheitlichen Polyurethanschaumstoff-Körper ermöglicht, egal ob der Produktionsprozess das Rezyklat-Gemisch als Einsatzstoff enthält oder in bestimmten Produktionsphasen nicht enthält.

Für Kunststoffabfälle haben sich unterschiedliche Arten der Entsorgung bzw. Wiederverwertung etabliert:
- Die Deponierung hat die Massen- und Volumenreduktion und die sichere Lagerung von Abfällen in einem Endlager zum Ziel.
- Die energetische Verwertung nützt die vergleichsweise hohen Heizwerte von Kunststoffabfällen im Rahmen von Verbrennungsprozessen.
- Beim werkstofflichen Recycling werden die Werkstoffe selbst im Rahmen physikalischer Prozesse nutzbar gemacht, z.B. durch Aufschmelzen, Umformen oder Compoundieren.
- Im Rahmen eines chemischen Recyclings werden die Kunststoffabfälle einer chemischen Umsetzung ausgesetzt, wie Cracken (z.B. Hydrocracking oder katalytisches Cracken), Pyrolyse, Vergasung, Solvolyse oder Depolymerisation. Bei der Depolymerisation werden die chemischen Bausteine des Werkstoffes zurückgewonnen, ggf. in chemisch modifizierter Form, und können nach Aufarbeitung als polymerisationsfähiger Rohstoff wieder eingesetzt werden.
- Beim enzymatischen Abbau von Kunststoffen, vorzugsweise solchen mit Heteroatomen, werden die Kunststoffe mit Enzymen oder Mikroorganismen in Kontakt gebracht und unter geeigneten Bedingungen in oftmals längeren Zeiträumen umgesetzt.

Da Polyurethanschaumstoff-Körper Duroplaste sind, sind diese nicht schmelzbar. Ein entsprechender Produktionsabfall wird deshalb bisher z.B. in Rebonding-Anwendungen verwertet, etwa durch Zusammenkleben von Schaumstoffflocken, oder wird zerkleinert und die Flocken werden in weniger werthaltigen Produkten unmittelbar selbst verwendet oder der Produktionsabfall wird letztendlich energetisch verwertet durch Verbrennen. Bisherige chemische Recyclingverfahren, z. B. durch Glykolyse oder Acidolyse, konnten sich industriell nur bedingt durchsetzen, wegen Qualitätsmängeln des Rezyklats. Der enzymatische Abbau von Polyurethanen ist bisher über das Laborstadium nicht hinausgekommen.

Bekannte Recyclingverfahren für Polyurethan-Schaumstoffe beinhalten z. B. eine Glykolyse der Polyurethane, ggf. in Gegenwart von Katalysatoren, bei erhöhter Temperatur von in der Regel 200°C oder darüber, eine Acidolyse der Polyurethane, ggf. in Gegenwart von Katalysatoren und/oder langkettigen Polyetheralkoholen, eine Aminolyse mit Mono- oder Polyaminen oder eine Kombination aus Glykolyse und Aminolyse.

So wird z. B. in der DE 19540950 A1, bzw. dem Patentfamilienmitglied EP 0771828 A2, die Glykolyse von Polyurethanen zu Recycling-Polyolen mit dem Ziel durchgeführt, dass diese Polyole mit einer OH-Zahl im Bereich von 100 bis 500 KOH/g, vorzugsweise 200 bis 450 mg KOH/g und einer Viskosität von 3000 bis 20000 mPas (200°C) liefert, die z.B. zur Herstellung von Polyurethan-Hartschaumstoffen oder Sandwich-Produkten mit einem Hartschaumstoff-Kern eingesetzt werden können.

In der DE 19917934 A1 werden Polyurethan-Abfälle, vorzugsweise Weichschaumstoffe, durch Glykolyse oder eine Kombination von Glykolyse und Aminolyse zu Recycling-Polyolen umgesetzt und die Umsetzungsprodukte in Gegenwart isocyanuratbildender Katalysatoren zu Polyurethan-Hartschaumstoffen verarbeitet.

Die EP 0835901 A2 betrifft die Glykolyse von Polyurethan-Hartschaumstoffen in Gegenwart von Katalysatoren und die Herstellung von Polyurethan-Hartschaumstoffen aus den erhaltenen Recycling-Polyolen.

Die in den o. g. Verfahren erhaltenen Polyole werden zur Herstellung von Polyurethan-Hartschaumstoffen mit anderen Eigenschaften als die Ausgangsstoffe eingesetzt. Folglich ist eine echte Kreislauf-Rückführung zur Herstellung von Polyurethan-Weichschaumstoffen in demselben Verfahren auf diese Weise nicht möglich, was durch die Charakterisierung der Recycling-Polyole durch eine hohe Hydroxylzahl (>100 mg KOH/g) und eine hohe Viskosität (>5000 mPas bei 25°C) unterstrichen wird.

Aufgabe der Erfindung ist es, Verschnitt, wie er bei der Herstellung von Polyurethanschaumstoff-Körpern als Produktionsabfall anfällt, im Produktionsprozess als Zumischung zu den Rohstoffen zur Herstellung der Polyurethanschaumstoffe desselben Produktionsprozesses wieder nutzbar zu machen.

### Zusammenfassung der Erfindung

Die Aufgabe wird gelöst durch das Verfahren nach Anspruch 1. Bevorzugte Ausführungsformen sind Gegenstand der Unteransprüche oder nachfolgend beschrieben.

Das erfindungsgemäße Verfahren zur Herstellung der Polyurethanschaumstoff-Körper umfasst zumindest folgende Schritte:
a) das Bereitstellen von zumindest
   - Polyolen A als Rohstoff,
   - Polyisocyanaten umfassend zumindest zwei Isocyanat-Gruppen und
   - einem Rezyklat-Gemisch enthaltend Polyole, insbesondere Polyole A und B;
b) das Umsetzen zumindest des Polyols A, von Polyolen des Rezyklat-Gemisches und der Polyisocyanate zu einem Polyurethanschaumstoff;
c) die Herstellung eines Polyurethanschaumstoff-Körpers aus dem Polyurethanschaumstoff als Teil eines oder mehrerer formgebender Prozesse unter Bildung von Verschnitt des Polyurethanschaumstoff-Körpers;
d) die Depolymerisation des Verschnitts, indem der Verschnitt einem Depolymerisations-Gemisch bei Temperaturen von 150 bis 190°C ausgesetzt wird, ggf. unter Zugabe des Polyols A, wobei das Depolymerisations-Gemisch umfasst:
   - zumindest einen Aminoalkohol als Spaltreagenz,
   - zumindest ein tertiäres Amin als Katalysator,
      um ein Rezyklat-Gemisch umfassend zumindest
   - durch Depolymerisation erhaltene Polyole A,
   - durch Depolymerisation erhaltene Polyole B und
   - ggf. zugesetzte Polyole A (als Rohstoff),
   zu erhalten, wobei
   die Polyole B ein Spaltprodukt des Polyurethanschaumstoffs des Verschnittes als Umsetzungsprodukt mit dem Aminoalkohol sind; und
e) das Zurückführen zumindest eines Anteils des Rezyklat-Gemisches in Schritt a).

Begriffe wie Polyol (inkl. Polyol A + B), Polyisocyanat, Aminoalkohol, tertiäres Amin meinen, wenn sie im Singular verwendet werden auch den Plural und umgekehrt, wenn sie im Plural verwendet werden auch den Singular.

Der Polyurethanschaumstoff-Körper umfasst auch mikrozellulär Schäume oder gefüllte Polyurethanschaumstoff-Körper oder faserverstärkte Polyurethanschaumstoff-Körper. Das Polyisocyanat ist vorzugsweise MDI oder TDI.

Das Rezyklat-Gemisch liegt vorzugsweise als homogene Dispersion vor, insbesondere als homogene Suspension.

Der Polyurethanschaumstoff-Körper ist z.B. eine Matratze, eine Schuhsole, ein Lenkrad oder ein PIR-Sandwichpaneel. Der Verschnitt ist z.B. ein Abschnitt des Polyurethanschaumstoff-Körpers, Sägemehl das beim Schneiden oder Sägen des Polyurethanschaumstoff-Körpers anfällt, überschüssig eingespritztes Material, welches aus einer Mould (Form) austritt, ein Anfahrblock und eine Fehlproduktion. Der Verschnitt kann 5 bis 15 Gew.% des Polyurethanschaumstoff-Körpers ausmachen.

### Detaillierte Beschreibung der Erfindung

Bei der Herstellung von Polyurethanschaumstoff-Körpern, wobei nach einer Ausgestaltung der Polyurethanschaumstoff-Körper auch ein PIR-(Polyisocyanurat-)-Schaumstoffkörper sein kann, werden formgebende Prozesse eingesetzt. Hierbei entstehen Polyurethanschaumstoff-Abfälle, z.B. Verschnitte. So werden z.B. bei der Matratzenherstellung sämtliche Ränder des Polyurethan- Schaumblocks entfernt, ebenso fällt Verschnitt bei der Herstellung von aus unterschiedlichen Lagen oder Zonen zusammengesetzter Matratzen an. Bei der Produktion von Sandwichpaneelen werden die Paneel-Ränder abgetrennt. Bei Moulding-Anwendungen, wie sie zur Herstellung von Lenkrädern und Schuhsolen eingesetzt werden, kann z.B. das überschüssig eingespritzte Material, welches dann aus der Form austritt, als Verschnitt anfallen.

Eine weitere Quelle für den Verschnitt ist Sägemehl, das beim Schneiden bzw. Sägen des Polyurethanschaumstoffs anfällt. Kennzeichnend für den Verschnitt ist es, dass es sich jeweils um Polyurethanschaumstoff handelt, der stofflich dem fertigen gewünschten Produkt entspricht, das einer Formgebung unterworfen wurde. Die Verschnitte können weiterhin Anfahrblöcke bzw. Fehlproduktionen sein. Der Verschnitt bewegt sich üblicherweise im Bereich von 5 bis 15 Gew.% des als Produkt erhaltenen Polyurethanschaumstoff-Körpers.

Die erfindungsgemäß hergestellten Polyurethanschaumstoff-Körper weisen Dichten im Bereich von 10 bis 600 kg/m³, insbesondere 20 bis 300 kg/m³ oder sogar 20 bis 100 kg/m³ auf.

Nach der vorliegenden Erfindung soll der anfallende Verschnitt durch Depolymerisation wieder verflüssigt werden, sodass er als Rohstoff für die Herstellung der Polyurethanschaumstoff-Körper in derselben Produktionsanlage wieder eingesetzt werden kann. Dabei wird das Rezyklat-Gemisch mit einem Minderanteil von z.B. 5 bis 50 Gew.%, insbesondere 20 bis 30 Gew.%, des Rezyklat-Gemisches relativ zum als Rohstoff eingesetzten (Neu-)Polyol A als Rohstoff eingesetzt.

Nach einer Ausführungsform beträgt im Schritt a) das Gewichtsverhältnis von Polyol A relativ zu Polyol B 20 zu 1 bis 1 zu 1. Nach einer weiteren Ausführungsform beträgt das Gewichtsverhältnis Depolymerisations-Gemisch mit zugesetztem Polyol A, zu Verschnitt 1 : 10 bis 1 : 1 und/oder das Gewichtsverhältnis Depolymerisations-Gemisch ohne zugesetztes Polyol A, zu Verschnitt 1 : 24 bis 1 : 5 oder 1 : 30 bis 1 : 4. Das Gewichtsverhältnis von Aminoalkohol zu Verschnitt kann 1: 24 bis 1 : 5 oder 1: 30 bis 1 : 4 betragen und auch unabhängig hiervon die Konzentration des tertiären Amins als Katalysator im Depolymerisations-Gemisch, d.h. ohne Verschnitt, 0,1 bis 6 Gew.% oder 1 bis 30 Gew.%, letzterer Bereich insbesondere wenn kein Polyol A zugesetzt wird, bezogen auf das Depolymerisations-Gemisch.

Vorteile des erfindungsgemäßen Verfahrens sind:
- die Durchführung der Depolymerisation bei Temperaturen von 150 bis 190°C, was eine energetisch günstige Variante im Vergleich zum Stand der Technik bedeutet, bei dem in der Regel Temperaturen oberhalb 200°C angewendet werden, weiterhin werden durch die geringere Temperatur auch weniger Nebenprodukte erhalten,
- die Depolymerisation kann innerhalb von 30 Minuten bis 3 Stunden durchgeführt werden, was gegenüber den Reaktionszeiten nach dem Stand der Technik eine deutlich kürzere Zeit und damit einen niedrigeren Energieeinsatz bedeutet,
- nach einer Ausgestaltung die Gewinnung von Recycling-Polyolen mit Hydroxylzahlen ähnlich den eingesetzten (Rohstoff-)Polyolen, mit z.B. einer Hydroxylzahl von unter 100 mg KOH/g, die den direkten Einsatz der Recycling-Polyole bei der Herstellung der Polyurethanschaumstoff-Körper ermöglicht,
- eine vollständige Kreislaufführung von Polyurethanen, insbesondere Weichschaumstoffen oder Integral-Schaumstoffen.

Das Depolymerisations-Gemisch umfasst zumindest folgende Komponenten:
a) zumindest einen Aminoalkohol als Spaltreagenz,
b) zumindest ein tertiäres Amin als Katalysator,
   wobei
c) zumindest ein Polyol, insbesondere Polyol A,
dem Depolymerisations-Gemisch zugemischt sein kann. Dann ist das Polyol / Polyol A Bestandteil des Depolymerisations-Gemisches oder es wird erst während oder nach der Depolymerisation zugesetzt.

Das Depolymerisations-Gemisch wird mit dem Verschnitt z.B. im Gewichtsverhältnis 5 : 95 bis 50 : 50 in Kontakt gebracht.

Das Gewichtsverhältnis von a) und b) zusammen zu Verschnitt beträgt vorzugsweise 4 : 96 bis 20 : 80.

Der Verschnitt des Polyurethanschaumstoff-Körpers wird soweit notwendig zerkleinert oder kompaktiert. Bei Polyurethan-Weichschäumen liegt er vorzugsweise in Form von Flocken vor, wobei die Flocken- bzw. Teilchengröße von der späteren Vermischung, der Reaktionstemperatur, dem Reaktortyp und der Mischtechnik abhängig ist und entsprechend gewählt werden muss.

Polyurethan-Hartschaum-Verschnitt kann z.B. in Form von verdichteten Briketts oder Presslingen vorliegen. Kompakte Polyurethanschaumstoff-Verschnitte wie z.B. mikrozellulare Polyurethane oder Elastomere können ohne Zerkleinerung umgesetzt werden.

Die Zerkleinerung des Polyurethanschaumstoff-Verschnitts kann z.B. mit Hilfe eines Schredders erfolgen, wobei das erhaltene zerkleinerte Fördergut anschließend mit Hilfe z.B. eines Schneckenförderers in den Reaktor für die weitere chemische Umsetzung (Depolymerisation) befördert werden kann. Wahlweise kann das Fördergut auch über mehrere hintereinandergeschaltete Zerkleinerungs- und Beförderungsschritte in den Reaktor befördert werden, wie z.B. über eine kombinierte Beförderungsanlage bei der erst eine grobe Zerkleinerung mit nachgeschalteter Beförderung stattfindet und das Fördergut dann in einem zweiten, feineren Schredder in noch kleinere Teilchen zerkleinert wird.

Bevorzugt bildet sich dabei ein Pfropfen aus dem Polyurethanschaumstoff-Verschnitt in der Rohrleitung z.B. der Förderschnecke. Durch die Kompression des Polyurethanschaumstoff-Verschnitts wird die darin eingeschlossene Luft herausgedrückt und muss entsprechend über die Rohrleitung abgeführt werden. Bei Eintritt des komprimierten Polyurethanschaumstoff-Verschnitts in den Reaktor kann das Material dann wieder expandieren und wird mit dem Schutzgas (z.B. Stickstoff) aus dem Reaktor geflutet, sodass effektiv ein Gasaustausch von der im Schaum eingeschlossenen Luft mit dem Schutzgas stattfindet. Dadurch wird überraschenderweise die Qualität des späteren Umsetzungsproduktes signifikant verbessert und gleichzeitig wird durch die Pfropfenbildung auch verhindert, dass während des Füllprozesses gasförmige Substanzen aus dem Reaktor entweichen können.

In dem Reaktor wird der zerkleinerte Polyurethanschaumstoff-Verschnitt dann mit dem Depolymerisations-Gemisch kontaktiert, vorzugsweise unter Umwälzung bzw. Rühren. Wahlweise ist auch ein Besprühen des Polyurethanschaumstoff-Verschnitts mit dem Depolymerisations-Gemisch innerhalb der Förderschnecke möglich, um eine Verkürzung der Reaktionszeit zu erreichen. Überraschenderweise lässt sich eine Depolymerisation im technischen Maßstab innerhalb einer vergleichsweise kurzen Zeitspanne realisieren, indem der Polyurethanschaumstoff-Verschnitt direkt während der Expansion des Pfropfens in dem Reaktor mit heißem Reaktionsgemisch aus dem Kessel besprüht wird.

Die Depolymerisation erfolgt bei Temperaturen von 150 bis maximal 190°C, insbesondere 170°C bis maximal 180°C und innerhalb einer Zeitspanne von etwa einer Stunde. Bei derzeitigen industriellen Verfahren ist nach der Depolymerisation noch eine Nachreaktionszeit von über einer Stunde bei Temperaturen über 200°C notwendig (z.B. 220 bis 250°C), um eine vollständige Umsetzung und Verflüssigung des Polyurethanschaumstoff-Verschnitts zu erreichen.

Durch die Depolymerisation entsteht ein flüssiges Rezyklat-Gemisch, wobei das Rezyklat-Gemisch, insbesondere eine Viskosität von 1000 bis 50000 mPas bei 25°C, vorzugsweise von 1000 bis 15000 mPas bei 25°C, aufweist.

Vor, während oder nach der Depolymerisation wird vorzugsweise Polyol A als Rohstoff dem Depolymerisations-Gemisch zugegeben, insbesondere in einer Menge, dass das Recyclat-Gemisch von 5 bis 45 Gew.% Polyol A aufweist.

Bei der Reaktionstemperatur reagieren die Urethangruppen des Polyurethans als Teil des Polyurethanschaumstoff-Körpers bzw. die bei der Reaktionstemperatur durch Rückspaltung entstehenden Isocyanat-Gruppen bevorzugt mit den Aminogruppen des Aminoalkohols, wobei neue Harnstoff-Gruppen entstehen und letztendlich kürzere Molekülketten gebildet werden, sodass als Endprodukt ein Depolymerisationspolyol (Polyol B) als Teil des Rezyklat-Gemisches entsteht, wobei die einzelnen Komponenten hauptsächlich endständige Hydroxygruppen aufweisen. Gleichzeitig wird auch das Originalpolyol A, aus dem der PU-Verschnitt hergestellt wurde, zumindest teilweise wieder freigesetzt:

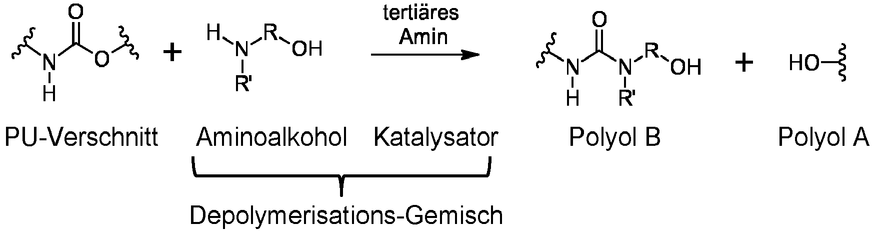

Das Rezyklat-Gemisch umfasst insbesondere zumindest folgende Komponenten:
i) als Polyol B ein Monomer oder Oligomer, das ein Umsetzungsprodukt des Aminoalkohols mit zumindest einer Urethan-Gruppe oder ggf. Harnstoff-Gruppen des Polyurethans ist,
ii) als Polyol A die durch Depolymerisation freigesetzten -Polyole, die gleich den Rohstoff-Polyolen sind, und
iii) ggf. zugesetzte Polyole A, z.B. als Rohstoff wie sie als Monomer für die Herstellung des Polyurethans als Baustoff für den Polyurethanschaumstoff-Körper eingesetzt wurden, insbesondere sind ii) und iii) chemisch gleich, aber unterschiedlichen Ursprungs, eines ist zugesetzt als Polyol A, wie dieses als Rohstoff käuflich erworben wurde, das andere Polyol A ist das Freisetzungsprodukt der erfindungsgemäßen Depolymerisation.

Das erhaltene Rezyklat-Gemisch ist insbesondere eine stabile und homogene Dispersion, insbesondere eine homogene Suspension, enthaltend nanoskalige Teilchen. Dies ist überraschend, da bei vergleichbaren Verfahren typischerweise Gemische mit starker Tendenz zur Phasentrennung entstehen. Die Teilchengröße in Dispersion beträgt vorzugsweise 20 bis 500 nm. Das Rezyklat-Gemisch ist reaktiv und lässt sich sehr gut wieder mit Isocyanaten umsetzen.

Überraschenderweise sind auch Polyurethanschaumstoff-Körper enthaltend SAN-oder PS-Domänen depolymerisierbar, weil die SAN- oder PS-Domänen im Rezyklat-Gemisch auf Grund der niedrigeren Spalt-Temperatur dispergiert erhalten werden. Damit sind auch Polyurethanschaumstoff-Körper für die bei der Herstellung Polymerpolyole auf PHD- (Polyharnstoff-Dispersion), SAN- (Styrol-Acrylnitril, wie z.B. DOWVOR-ALUX HL 500 Polyol) oder PS-(Polystyrol) Basis eingesetzt wurden, recyclebar.

Die im Depolymerisations-Gemisch eingesetzten Komponenten sind bevorzugt:
a) für den Aminoalkohol:
   Aminoalkohole, die gleichzeitig eine Aminogruppe (primär oder sekundär) und eine Hydroxygruppe aufweisen insbesondere mit 2 und mehr Kohlenstoffatomen neben ggf. Sauerstoff zwischen der Aminogruppe und der Hydroxylgruppe. Beispiele sind Alpamine N41, Diglycolamin (DGA), N-Methylethanolamin, N-Ethylethanolamin, N-Butylethanolamin, N-(2-Aminoethyl)ethanolamin, N-(2-Hydroxyethyl)anilin, Hydroxyethylpiperazin, Monoethanolamin (MEA), Diethanolamin (DEOA), Isopropanolamin, Diisopropanolamin, 3-Amino-1-propanol, 5-Amino-1-pentanol, Bis{2-[(2-hydroxyethyl)amino]ethyl}carbonat, sowie sämtliche Aminoalkohole, bei denen zwischen der Amino- und Hydroxylgruppe eine Kette von mehr als 3 Kohlenstoffatomen vorliegt.
b) für das tertiäre Amin:
   Das tertiäre Amin weist zumindest eine tertiäre Amino-Gruppe auf. Geeignete tertiäre Amine sind beispielsweise C2- oder C3- Alkyl-Dimethylamine, N-Alkyl-Piperazine sowie N-Alkylimidazole. Beispiele sind: Dimethylaminopropyldipropanolamin (PC CAT^{®} NP 10), Bis-(dimethylaminopropyl)amin (PC CAT^{®} NP 20), 1,3,5-Tris(3-dimethylaminopropyl) hexahydrotriazine (PC CAT^{®} NP 40), Pentamethyldipropylenetriamine (PC CAT^{®} NP 50), N,N'-Bis-(3-dimethylaminopropyl)urea (PC CAT^{®} NP 55), Bis(2-dimethylaminoethyl)ether (PC CAT^{®} NP 99), Tris(3-dimethylamino)propylamine (PC CAT^{®} NP 109), Dimethylaminopropylamin (PC AMINE^{®} MA 100), N-(2-Hydroxypropyl)imidazol (PC CAT^{®} HPI), 1-Methylimidazol (PC CAT^{®} NMI), 1,2-Dimethylimidazol (PC CAT^{®} DMI), 1,1,3,3-Tetramethylguanidin (PC CAT^{®} TMG), 7-Azanorbornen und weitere.Insbesondere geeignet sind Diaza-/Triaza-Bicycloalkane und Diaza-/Triaza-Bicycloalkene wie z.B. 1,4-Diazabicyclo[2.2.2]octan (PC CAT^{®} TD 100), 1,8-Dia-zabicyclo[5.4.0]undec-7-en (PC CAT^{®} DBU), 1,5,7-Triazabicyclo[4.4.0]dec-5-en (TBD) und 1,5-Diazabicyclo[4.3.0]non-5-en (DBN).
c) Polyole, insbesondere Polyol A:
   Das Polyol dient als Verdünnungs-, Lösungs- und/oder Dispergiermittel für die bei der Depolymerisation entstehenden Komponenten i) und ii).

Zusätzlich kann N-Ethylcyclohexylamin (PC^{®} ADD NECHA) und/oder N-Methylcyclohexylamin in dem Depolymerisations-Gemisch enthalten sein. Dieses entfaltet eine zusätzliche Depolymerisationswirkung.

Die Depolymerisation wird in der Regel in Standard-Reaktoren aus Edelstahl oder emaillierten Stahlkesseln durchgeführt, die Zuführung der Polyurethan-Materialien wird derart gestaltet, dass während der Zuführung des Verschnitts weder Gase noch verdampfende Flüssigkeiten aus der Verschnittzufuhr austreten können oder der Austritt zumindest minimiert ist. Solche Zuführungen sind z. B. Rohrkettenförderer mit Stopfschnecke oder Zellradschleuse. In einer bevorzugten Ausführungsform des Verfahrens wird das Depolymerisations-Gemisch z. B. in einem direkt oder indirekt beheizbaren Reaktor mit Rührwerkzeug, Begasungsmöglichkeit und Temperaturkontrolle vorgelegt und die Polyurethan-Materialien durch eine spezielle, kompaktierende Vorrichtung mit einem gasdichten Verschluss am Reaktor zugeführt.

Diese kompaktierende Vorrichtung kann z. B. eine Schnecke sein, welche das Fördergut komprimiert und einen Stopfen bildet und der Stopfen den Auslass- vom Einfüllbereich abdichtet und somit eine Abdichtung im Rahmen eines Atmosphärenwechsels darstellt, so dass an der Auslassseite ein Medium vorbeiströmen (flüssig oder gasförmig) und das Fördergut mitnehmen kann.

Insbesondere bevorzugt sind Polyole A (Rohstoff-Polyol), die auch bereits als Rohstoff bei der Herstellung des Polyurethans eingesetzt wurden, das den Verschnitt des Polyurethanschaumstoff-Körpers bildet. Dazu gehören aromatische Polyesterpolyole wie z.B. STEPANPOL^{®} PS-2412 (Phthalsäureanhydrid-Basis), aliphatische Polyesterpolyole wie z.B. Bayflex^{®} 2002 H (Adipinsäure-Basis) oder Polyetherpolyole wie z.B. VORANOL^{™} 3322 Polyol (EO/PO-Copolymer Polyethertriol auf Glycerin-Basis).

Die Funktionalität der Polyole kann z.B. zwischen 2 bis 5 liegen und die OH-Zahl zwischen 28 bis 400 mgKOH/g.

Da das so erhaltene Rezyklat-Gemisch chemisch dem Rohstoff-Polyol insgesamt ähnlich ist, ist eine hohe Verträglichkeit und Zurückführbarkeit in einen Kreislaufprozess gewährleistet.
d) Additive (fakultativ):
Durch den Zusatz von Additiven können Eigenschaften des Depolymerisations-Gemisches bzw. des Rezyklat-Gemisches eingestellt bzw. verbessert werden. Eingesetzt werden können z.B. chemische Trockenmittel, die mit Wasser reagieren, um den Wassergehalt während der Depolymerisation zu reduzieren, wie z.B. Kohlensäure-bis[2-(2-isopropyloxazolidin-3-yl)ethyl]ester oder 3-Butyl-2-(1-ethylpentyl)-oxazolidin.

Mit Antioxidationsmitteln kann die Farbzahl der Rezyklat-Gemische verbessert werden. Bei organischen Farbstoffen kann ein Oxidationsmittel, wie ein Peroxid, das Additiv sein, das den Farbstoff zerstört.

Mit z.B. N-Ethylcyclohexylamin (PC^{®} ADD NECHA) oder N-Methylcyclohexylamin können die Antifouling-Eigenschaften verbessert werden.

Mit Glyphosat-Derivaten oder Dicyandiamid können die Flammschutzeigenschaften verbessert werden.

Bei der Depolymerisation können durch die ursprünglich in den Schaumstoffen erfolgte Verwendung von z.B. MDI oder TDI Nebenprodukte wie aromatische Diamine entstehen, die in einem Nachbehandlungsschritt durch Umsetzung mit Epoxy-Verbindungen, Säureanhydriden oder Carbonsäuren (Nachbehandlungszusätze) im Anschluss an die Depolymerisation umgesetzt werden. Bei einer niedrigen Reaktionstemperatur von (kleiner gleich 180°C und insbesondere kleiner 160°C) werden nur wenig bis keine aromatischen Diamine gebildet, bei höherer Reaktionstemperatur entsprechend mehr. Durch Zugabe von Nachbehandlungszusätzen wie Säureanhydriden, z. B. Bernsteinsäureanhydrid, Phthalsäureanhydrid oder Essigsäureanhydrid, oder Hydroxy-Carbonsäuren, z. B. Milchsäure, Mandelsäure, Äpfelsäure, Citronensäure, Ricinolsäure oder Mono- bzw. Dicarbonsäuren, z. B. Adipinsäure, Phthalsäure wird der Anteil an aromatischen Diaminen auf einen nicht-kritischen Wert von z.B. < 0,1 Gew% reduziert. Auch Epoxide oder organische Carbonate sind als Nachbehandlungszusätze einsetzbar.

Mit Zugabe der Säureanhydride oder Carbonsäuren lässt sich auch eine eventuell zu hohe Aminzahl des Rezyklat-Gemisches reduzieren. Bei einer zu hohen Säurezahl können Basen wie Amine, Natrium- oder Kaliumhydroxid zum Rezyklat-Gemisch hinzugefügt werden. Im Nachbehandlungsschritt werden bezogen auf das Rezyklat-Gemisch fakultativ 1 bis 10 Gew.% Nachbehandlungszusätze eingesetzt.

Für den Nachbehandlungsschritt kann das Rezyklat-Gemisch in einer Mischstrecke bzw. in einem Sammeltank auf eine geeignete Temperatur abgekühlt werden und mit den entsprechenden Komponenten versetzt werden. Es wird vorzugsweise für eine geeignete Zeit geheizt oder gekühlt sowie intensiv durchmischt.

Zusätzlich können ggf. Schwebstoffe, Pigmente etc. durch Filtration anschließend an die Nachbehandlung abgetrennt werden. Insbesondere wird das Rezyklat-Gemisch filtriert bevor es in Schritt a) eingesetzt wird.

Das in diesem Prozess erhaltene Rezyklat-Gemisch mit den Polyolen A und B kann dann wieder in dem gleichen Polyurethan-Herstellungsprozess bzw. der gleichen Polyurethan-Herstellungsanlage eingesetzt werden und der Kreislauf schließt sich. Dazu werden die für die Herstellung des jeweiligen Polyurethanschaumstoff-Körpers eingesetzten Isocyanate (typischerweise TDI, MDI oder polymeres MDI) mit den unter Komponente c) beschriebenen und für die Herstellung des jeweiligen Polyurethanschaumstoff-Körpers eingesetzten (Rohstoff-)Polyolen umgesetzt. Das geschieht unter Einsatz von Additiven wie z.B. Blas-, Gel- oder Trimerisierungs-Katalysatoren, Schaumstabilisatoren, Wasser, physikalischen Treibmitteln, Quervernetzern, Kettenverlängerern, Antioxidationsmitteln, Farbmittel und sonstigen Additiven, wobei alle Komponenten miteinander vermischt werden und es zu einer Reaktion kommt, bei der ein zelliges Polyurethan-Material erhalten wird. Dabei kann ein stöchiometrischer Über- oder Unterschuss an Isocyanat eingesetzt werden (hoher bzw. niedriger Index). Die Umsetzung kann bei erhöhter Temperatur oder erhöhtem Druck und mit entsprechender Anlagentechnik erfolgen.

Ein Teil des eingesetzten Rohstoff-Polyols lässt sich entsprechend durch die Rezyklat-Gemische ersetzen, wobei Polyurethanschaumstoff-Körper erhalten werden, die sich in der Qualität nicht oder nur minimal von den Polyurethanschaumstoff-Körpern unterscheiden, die ohne Einsatz der Rezyklat-Gemische hergestellt wurden.

Auch die unter Einsatz von Rezyklat-Gemischen hergestellten Polyurethanschaumstoff-Körper lassen sich nach dem gleichen Prozess erneut depolymerisieren und wieder zur Herstellung von neuen Polyurethanschaumstoff-Körpern einsetzen, sodass der Zyklus mehrere Male durchlaufen werden kann.

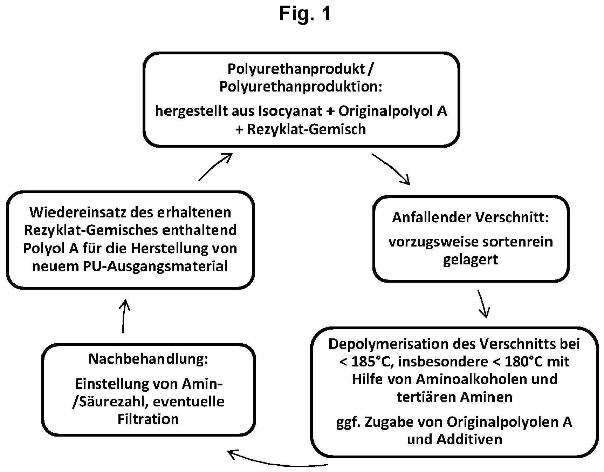

Das Verfahren wird durch Fig.1 weiter erläutert.

### Versuchsbeispiele:

Eingesetzt wurden folgende Komponenten:

| | |
|---|---|
| Polyetherpolyol 1: | Glycerol-gestartetes EO/PO-Copolymer Polyethertriol mit mittlerem Molekulargewicht von 3500 g/mol |
| Polyesterpolyol 1: | auf Phthalsäureanhydrid und Diethylenglycol basierendes aromatisches Polyesterpolyol mit OH-Zahl von 235 mgKOH/g |
| Polyetherpolyol 2: | Sucrose/Glycerin gestartetes Polyetherpolyol mit OH-Zahl von 480 mgKOH/g |
| Polyesterpolyol 2: | auf Adipinsäure basierendes, aliphatisches Polyesterdiol mit mittlerem Molekulargewicht von 2000 g/mol |
| PC^{®} SYN-SOLVE^{®} F 587: | Gemisch aus 98,8% 5-Amino-1-pentanol (PC AMINE^{®} MA 105) und 1,2% 1,8-Diazabicyclo[5.4.0]undec-7-en (PC CAT^{®} DBU) |
| PC^{®} SYN-SOLVE^{®} R 411: | Gemisch aus 46% Diethanolamin (PC^{®} DEOA), 13% 1,2-Dimethylimidazol (PC CAT^{®} DMI) und 41% Diethylenglycol (DEG) |
| PC^{®} SYN-SOLVE^{®} R 424: | Gemisch aus 96,5% 1-(2-Hydroxyethyl)-piperazin (PC AMINE^{®} MA 130) und 3,5% 1,5-Dia-zabicyclo[4.3.0]non-5-en (PC CAT^{®} DBN) |
| PC^{®} SYN-SOLVE^{®} SR 515: | Gemisch aus 67,7% Diisopropanolamin (PC^{®} DIPA), 0,8% 1,1,3,3-Tetramethylguanidin (PC CAT^{®} TMG) und 31,5% 1,4-Butandiol (BDO) |
| PC AMINE^{®} MA 105 | 5-Amino-1-pentanol |
| PC CAT^{®} DBU | 1,8-Diazabicyclo[5.4.0]undec-7-en |
| PSA | Phthalsäureanhydrid |
| Citronensäure | 2-Hydroxypropan-1,2,3-tricarbonsäure |
| FDCA | 2,5-Furandicarbonsäure |
| MSA | Maleinsäureanhydrid |
| VORALUX^{™} HL 108 | Styrol-Acrylonitril (SAN) basierendes Copolymerpolyol mit einem Feststoffgehalt von 25% |
| Tegostab^{®} BF 2370 | Polysiloxan Polyoxyalkylen Block-Copolymer |
| PC CAT^{®} TD 33 | Triethylendiamin gelöst in Dipropylenglycol (33 zu 67 Gew.%) |
| PC CAT^{®} NP 90 | (Bis(2-dimethylaminoethyl)ether gelöst in Dipropylenglycol (70 zu 30 Gew.%) |
| PC CAT^{®} T 7 | Zinn(II)-neodecanoat |
| Voranate^{™} T-80 | Gemisch aus Toluol-2,4-diisocyanat und Toluol-2,6-diisocyanat (TDI) (80 zu 20 Gew.%) |

### Beispiel 1: Depolymerisation von TDI-Blockweichschaum (20 kg/m³ Schüttdichte)

In einen 2 L Sulfierkolben mit schnell laufendem mechanischen Rührer, Thermoelement, Stickstoff-Beschleierung und Rückflusskühler wurden 207,5 g Polyetherpolyol 1 und 42,5 g PC^{®} SYN-SOLVE^{®} F 587 vorgelegt und das Gemisch wurde unter langsamem Rühren auf etwa 170 °C erwärmt. Unter starkem Rühren wurden 250 g TDI-basierender Blockweichschaum in Form von Flocken innerhalb einer Stunde eingetragen, die Flocken lösten sich sehr schnell auf. Danach wurde noch 15 Minuten bei 180 °C gerührt, sodass ein dünnflüssiges Reaktionsgemisch entstand. Während das Gemisch auf 140 °C abkühlte, wurden 37,5 g PSA zugegeben und es wurde 30 Minuten bei 140 °C weitergerührt. Das Reaktionsprodukt wurde in einen Zwischenbehälter überführt, wo es auf Raumtemperatur abkühlen und mit anderen Ansätzen homogenisiert wurde. Das Rezyklat-Gemisch war hell, phasenstabil, wies eine Viskosität von 4600 mPas (25°C), einen Wasserwert von 0,93%, eine Hydroxylzahl von 67 mgKOH/g und eine Säurezahl von 2,1 mgKOH/g auf.

### Beispiel 2: Depolymerisation von TDI-Blockweichschaum (20 kg/m³ Schüttdichte)

In einen 2 L Sulfierkolben mit schnell laufendem mechanischen Rührer, Thermoelement, Stickstoff-Beschleierung und Rückflusskühler wurden 207,5 g Polyetherpolyol 1 und 42,5 g PC^{®} SYN-SOLVE^{®} F 587 vorgelegt und das Gemisch wurde unter langsamem Rühren auf etwa 170 °C erwärmt. Unter starkem Rühren wurden 250 g TDI-basierender Blockweichschaum in Form von Flocken innerhalb einer Stunde eingetragen, die Flocken lösten sich sehr schnell auf. Danach wurde noch 20 Minuten bei 180 °C gerührt, sodass ein dünnflüssiges Reaktionsgemisch entstand. Während das Gemisch auf 140 °C abkühlte, wurden 32,4 g Citronensäure zugegeben und es wurde 1 Stunde bei 150 °C weitergerührt. Das Reaktionsprodukt wurde in einen Zwischenbehälter überführt, wo es auf Raumtemperatur abkühlen und mit anderen Ansätzen homogenisiert wurde. Das Rezyklat-Gemisch war hell, phasenstabil, wies eine Viskosität von 7100 mPas (25°C), einen Wasserwert von 1,89%, eine Hydroxylzahl von 69 mgKOH/g und eine Säurezahl von 15,9 mgKOH/g auf.

### Beispiel 3: Depolymerisation von TDI-Blockweichschaum (20 kg/m³ Schüttdichte)

In einen 2 L Sulfierkolben mit schnell laufendem mechanischen Rührer, Thermoelement, Stickstoff-Beschleierung und Rückflusskühler wurden 207,5 g Polyetherpolyol 1 und 42,5 g PC^{®} SYN-SOLVE^{®} F 587 vorgelegt und das Gemisch wurde unter langsamem Rühren auf etwa 170 °C erwärmt.

Unter starkem Rühren wurden 250 g TDI-basierender Blockweichschaum in Form von Flocken innerhalb einer Stunde eingetragen, die Flocken lösten sich sehr schnell auf. Danach wurde noch 20 Minuten bei 180 °C gerührt, sodass ein dünnflüssiges Reaktionsgemisch entstand. Während das Gemisch auf 140 °C abkühlte, wurden 39,5 g FDCA zugegeben und es wurde 1 Stunde bei 150 °C weitergerührt. Das Reaktionsprodukt wurde in einen Zwischenbehälter überführt, wo es auf Raumtemperatur abkühlen und mit anderen Ansätzen homogenisiert wurde. Das Rezyklat-Gemisch war hell, phasenstabil, wies eine Viskosität von 7200 mPas (25°C), einen Wasserwert von 1,68%, eine Hydroxylzahl von 76 mgKOH/g und eine Säurezahl von 12,5 mgKOH/g auf.

### Beispiel 4 (Vergleichsbeispiel): Depolymerisation von TDI-Blockweichschaum (20 kg/m³ Schüttdichte), ohne tertiäres Amin als Katalysator

In einen 2 L Sulfierkolben mit schnell laufendem mechanischen Rührer, Thermoelement, Stickstoff-Beschleierung und Rückflusskühler wurden 207,5 g Polyetherpolyol 1 und 42 g PC AMINE^{®} MA 105 vorgelegt und das Gemisch wurde unter langsamem Rühren auf etwa 170 °C erwärmt. Unter starkem Rühren wurden 250 g TDI-basierender Blockweichschaum in Form von Flocken innerhalb 3 Stunden eingetragen. Die Depolymerisationsgeschwindigkeit war ohne tertiäres Amin als Katalysator deutlich geringer im Vergleich zu Beispiel 1. Danach wurde noch 15 Minuten bei 180 °C gerührt. Das Reaktionsprodukt wurde auf Raumtemperatur abgekühlt, es war hochviskos und dunkelbraun, wies eine Viskosität von über 50000 mPas (20 °C) auf und war für eine weitere direkte Verarbeitung unbrauchbar.

### Beispiel 5 (Vergleichsbeispiel): Depolymerisation von TDI-Blockweichschaum (20 kg/m³ Schüttdichte), ohne Aminoalkohol als Spaltreagenz

In einen 2 L Sulfierkolben mit schnell laufendem mechanischen Rührer, Thermoelement, Stickstoff-Beschleierung und Rückflusskühler wurden 207,5 g Polyetherpolyol 1 und 0,5 g PC CAT^{®} DBU vorgelegt und das Gemisch wurde unter langsamem Rühren auf etwa 170 °C erwärmt. Unter starkem Rühren wurden 250 g TDI-basierender Blockweichschaum in Form von Flocken eingetragen. Die Depolymerisation musste nach Zugabe von etwa der Hälfte der Flocken abgebrochen werden, da sich das Material nicht weiter auflösen ließ.

### Beispiel 6: Depolymerisation von PIR-Sandwichpaneel-Briketts (350 kg/m³ Schüttdichte)

In einen 2 L Sulfierkolben mit schnell laufendem mechanischen Rührer, Thermoelement, Stickstoff-Beschleierung und Rückflusskühler wurden 100 g Polyesterpolyol 1 und 150 g PC^{®} SYN-SOLVE^{®} R 411 vorgelegt und das Gemisch wurde unter langsamem Rühren auf etwa 170 °C erwärmt. Unter starkem Rühren wurden 250 g PIR-Sandwichpaneele in Form von Briketts innerhalb 15 min eingetragen. Danach wurde noch 15 Minuten bei 180 °C gerührt, sodass ein dünnflüssiges Reaktionsgemisch entstand. Während das Gemisch auf 140 °C abkühlte, wurden 50 g PSA zugegeben und es wurde 30 Minuten bei 140 °C weitergerührt. Das Reaktionsprodukt wurde in einen Zwischenbehälter überführt, wo es auf Raumtemperatur abkühlte und mit anderen Ansätzen homogenisiert wurde. Das Rezyklat-Gemisch war hell, phasenstabil, wies eine Viskosität von 10500 mPas (25 °C), einen Wasserwert von 1,31%, eine Hydroxylzahl von 298 mgKOH/g und eine Säurezahl von 2,3 mgKOH/g auf.

### Beispiel 7: Depolymerisation von polymer-MDI-basierenden Gieß-Hartschaum-Briketts (400 kg/m³ Schüttdichte)

In einen 2 L Sulfierkolben mit schnell laufendem mechanischen Rührer, Thermoelement, Stickstoff-Beschleierung und Rückflusskühler wurden 162 g Polyetherpolyol 2 und 88 g PC^{®} SYN-SOLVE^{®} R 424 vorgelegt und das Gemisch wurde unter langsamem Rühren auf etwa 170 °C erwärmt. Unter starkem Rühren wurden 250 g polymer-MDI-basierender Gieß-Hartschaum in Form von Briketts innerhalb 15 Minuten eingetragen, die Flocken lösten sich sehr schnell auf. Danach wurde noch 15 Minuten bei 180 °C gerührt, sodass ein dünnflüssiges Reaktionsgemisch entstand. Während das Gemisch auf 140 °C abkühlte, wurden 37,5 g PSA zugegeben und es wurde 30 Minuten bei 140 °C weitergerührt. Das Reaktionsprodukt wurde in einen Zwischenbehälter überführt, wo es auf Raumtemperatur abkühlte und mit anderen Ansätzen homogenisiert wurde. Das Rezyklat-Gemisch war hell, phasenstabil, wies eine Viskosität von 12500 mPas (25°C), einen Wasserwert von 0,81%, eine Hydroxylzahl von 218 mgKOH/g und eine Säurezahl von 1,8 mgKOH/g auf. Die durchschnittliche Partikelgröße (bestimmt durch dynamische Lichtstreuung nach DIN ISO 22412) lag bei 99,97 nm.

### Beispiel 8: Depolymerisation von PU-Schuhsolen (Polyesterpolyol- und MDI-basiert, 250 kg/m³ Schüttdichte)

In einen 2 L Sulfierkolben mit schnell laufendem mechanischen Rührer, Thermoelement, Stickstoff-Beschleierung und Rückflusskühler wurden 61,5 g Polyesterpolyol 2 und 63,5 g PC^{®} SYN-SOLVE^{®} SR 515 vorgelegt und das Gemisch wurde unter langsamem Rühren auf etwa 170 °C erwärmt. Unter starkem Rühren wurden 375 g PU-Schuhsolen in Form von Flocken innerhalb einer halben Stunde eingetragen, die Flocken lösten sich sehr schnell auf. Danach wurde noch 15 Minuten bei 180 °C gerührt, sodass ein dünnflüssiges Reaktionsgemisch entstand. Während das Gemisch auf 140 °C abkühlte, wurden 25 g PSA zugegeben und es wurde 30 Minuten bei 140 °C weitergerührt. Das Reaktionsprodukt wurde in einen Zwischenbehälter überführt, wo es auf Raumtemperatur abkühlen konnte und mit anderen Ansätzen homogenisiert wurde. Das Rezyklat-Gemisch war hell, phasenstabil, wies eine Viskosität von 12400 mPas (25°C), einen Wasserwert von 0,93%, eine Hydroxylzahl von 131 mgKOH/g und eine Säurezahl von 1,2 mgKOH/g auf.

### Beispiel 9 (Vergleichsbeispiel): Herstellung eines Polyurethanschaumstoff-Körpers (Matratzenschaum ohne Rezyklat-Gemisch):

Ein Polyolgemisch bestehend aus folgenden Komponenten wurde in einem Reaktionsgefäß von 10 L angesetzt und gründlich vermischt:
320 g Polyetherpolyol 1
80 g VORALUX^{™} HL 108
12 g Wasser
3,2 g Tegostab^{®} BF 2370
0,64 g PC CAT^{®} TD 33
0,32 g PC CAT^{®} NP 90
0,68 g PC CAT^{®} T 7

Das Gemisch wurde anschließend mit 158,2 g Voranate^{™} T-80 versetzt, direkt für etwa 4 Sekunden unter starkem Rühren vermischt und sofort in einen mit PE-Folie ausgekleideten Karton gegossen. Das Schäumen startet unmittelbar nach dem Eingießen. Der so erhaltene Polyurethanschaumstoff wurde für 14 Tage bei Raumtemperatur ausgehärtet und anschließend wurden 3 cm der Ränder mit Hilfe einer Bandsäge abgeschnitten. Der Polyurethanschaumstoff hatte im Kern ein Raumgewicht von 35 kg/m³.

### Beispiel 10: Herstellung eines Polyurethanschaumstoff-Körpers (Matratzenschaum) unter Verwendung eines Rezyklat-Gemisches:

Ein Polyolgemisch bestehend aus folgenden Komponenten wurde in einem Reaktionsgefäß von 10 L angesetzt und gründlich vermischt:
240 g Polyetherpolyol 1
80 g Rezyklat-Gemisch (hergestellt aus dem Polyurethanschaumstoff aus Beispiel 9, Verfahren ähnlich Beispiel 1)
80 g VORALUX^{™} HL 108
12 g Wasser
3,2 g Tegostab^{®} BF 2370
0,64 g PC CAT^{®} TD 33
0,32 g PC CAT^{®} NP 90
0,68 g PC CAT^{®} T 7

Das Gemisch wurde anschließend mit 158,2 g Voranate^{™} T-80 versetzt, direkt für etwa 4 Sekunden unter starkem Rühren vermischt und sofort in einen mit PE-Folie ausgekleideten Karton gegossen. Das Schäumen startet unmittelbar nach dem Eingießen. Der so erhaltene Polyurethanschaumstoff wurde für 14 Tage bei Raumtemperatur ausgehärtet und anschließend wurden 3 cm der Ränder mit Hilfe einer Bandsäge abgeschnitten. Der Polyurethanschaumstoff hatte im Kern ein Raumgewicht von 35 kg/m³. Die mechanischen Werte des Schaumstoffs zeigten keine wesentlichen Unterscheide im Vergleich zum Polyurethanschaumstoff, der ohne Verwendung eines Rezyklat-Gemisches hergestellt wurde (Beispiel 9). Eine Messung von flüchtigen organischen Verbindungen (VOCs) nach DIN EN ISO 16000-10 belegte keine erhöhte Emissionsrate des Schaumstoffs im Vergleich zum Polyurethanschaumstoff aus Beispiel 9.

### Beispiel 11: Depolymerisation von TDI-Blockweichschaum (20 kg/m³ Schüttdichte) im Reaktormaßstab

In einem 500 L Stahlreaktor mit Dispergierscheibe, Mantel- und Bodenheizung sowie -kühlung, Temperatursteuerung, Stickstoff-Beschickung und Kondensator mit Rücklauf wurden 166 kg Polyetherpolyol 1 und 34 kg PC^{®} SYN-SOLVE^{®} F 587 vorgelegt und das Gemisch wurde unter Rühren auf etwa 170 °C vorgewärmt. Unter Rühren wurden 200 kg TDI-basierender Blockweichschaum in Form von Flocken innerhalb einer Stunde über eine Förderschnecke kontinuierlich zugeführt.

Nach dem Auflösen der Flocken wurde noch 15 Minuten bei 180 °C gerührt, sodass ein dünnflüssiges Reaktionsgemisch entstand. Das Gemisch wurde auf 140 °C heruntergekühlt, es wurden 40 kg PSA zugegeben und es wurde 30 Minuten bei 140 °C weitergerührt. Das Reaktionsprodukt wurde anschließend in einen Zwischenbehälter überführt (bei gleichzeitiger grober Filtration), in welchem es auf Raumtemperatur abkühlen konnte und mit anderen Ansätzen homogenisiert wurde. Das Rezyklat-Gemisch war hell, phasenstabil, wies eine Viskosität von 5100 mPas (25 °C), einen Wasserwert von 0,98%, eine Hydroxylzahl von 72 mgKOH/g und eine Säurezahl von 2,6 mgKOH/g auf. Der Filterrückstand betrug < 1% und die durchschnittliche Partikelgröße (bestimmt durch dynamische Lichtstreuung nach DIN ISO 22412) lag bei 41,3 nm.

### Beispiel 12: Depolymerisation von PIR-Hartschaum-Briketts (350 kg/m³ Schüttdichte) im Reaktormaßstab

In einem 500 L Stahlreaktor mit breitem Propellerrührer, Mantel- und Bodenheizung sowie -kühlung, Temperatursteuerung, Stickstoff-Beschickung und Kondensator mit Rücklauf wurden 80 kg Polyesterpolyol 1 und 120 kg PC^{®} SYN-SOLVE^{®} R 411 vorgelegt und das Gemisch wurde unter Rühren auf etwa 175 °C vorgewärmt. Unter Rühren wurden 200 kg pMDI-basierender PIR-Hartschaum in Form von Briketts innerhalb einer Stunde über eine Förderschnecke kontinuierlich zugeführt. Nach dem Auflösen der Briketts wurde noch 15 Minuten bei 180 °C gerührt, sodass ein dünnflüssiges Reaktionsgemisch entstand. Das Gemisch wurde auf 140 °C heruntergekühlt, es wurden 26,5 kg MSA zugegeben und es wurde 60 Minuten bei 140 °C weitergerührt. Das Reaktionsprodukt wurde anschließend in einen Zwischenbehälter überführt (bei gleichzeitiger feiner Filtration), in welchem es auf Raumtemperatur abkühlen konnte und mit anderen Ansätzen homogenisiert wurde. Das Rezyklat-Gemisch war hell, klar, phasenstabil, wies eine Viskosität von 6500 mPas (25 °C), einen Wasserwert von 1,22%, eine Hydroxylzahl von 303 mgKOH/g und eine Säurezahl von 2,9 mgKOH/g auf. Der Filterrückstand betrug < 1%.

### Beispiel 13: Verschäumung mit Rezyklat-Gemisch gemäß Beispiel 11

Im industriellen Maßstab wurden auf einer Schäumungsanlage Matratzenschäume kontinuierlich hergestellt. Der Anteil am Rezyklat-Gemisch bezogen auf den hergestellten Matratzenschaum lag bei etwa 14,3%. Die Verarbeitungsparameter der Anlage während des Schäumens mussten nur minimal angepasst werden im Vergleich zur Produktion von Matratzenschaum ohne Verwendung eines Rezyklat-Gemisches.

Die mechanischen Eigenschaften des kontinuierlich hergestellten Schaumstoffs mit 14,3% Anteil an Rezyklat-Gemisch zeigten verbesserte Werte in der dynamischen Ermüdung in Dauerschwingversuchen, z.B. nach DIN EN ISO 3385, und weiterhin sogar einen verbesserten Druckverformungsrest, z.B. nach DIN EN ISO 1856. Der Matratzenschaum hatte keinen starken Geruch und der Anteil an flüchtigen organischen Verbindungen (VOCs) nach DIN EN ISO 16000-10 war vernachlässigbar gering, dass die Matratze mit dem Blauen Engel ausgezeichnet werden konnte.

## Patentansprüche

1. Verfahren zur Herstellung von Polyurethanschaumstoff-Körpern umfassend zumindest folgende Schritte:
a) das Bereitstellen von zumindest
- Polyolen A als Rohstoff,
- Polyisocyanaten umfassend zumindest zwei Isocyanat-Gruppen und
- eines Rezyklat-Gemisches enthaltend Polyole, insbesondere Polyole A und B;
b) das Umsetzen zumindest des Polyols A, von Polyolen des Rezyklat-Gemisches und der Polyisocyanate zu einem Polyurethanschaumstoff,
c) die Herstellung eines Polyurethanschaumstoff-Körpers aus dem Polyurethanschaumstoff als Teil eines oder mehrerer formgebender Prozesse unter Bildung von Verschnitt des Polyurethanschaumstoff-Körpers;
d) die Depolymerisation des Verschnitts, indem der Verschnitt einem Depolymerisations-Gemisch bei Temperaturen von 150 bis 190°C ausgesetzt wird, ggf. unter Zugabe des Polyols A, wobei das Depolymerisations-Gemisch umfasst:
- zumindest einen Aminoalkohol als Spaltreagenz,
- zumindest ein tertiäres Amin als Katalysator,
um ein Rezyklat-Gemisch umfassend zumindest
- durch Depolymerisation erhaltene Polyole A,
- durch Depolymerisation erhaltene Polyole B und
- ggf. zugesetzte Polyole A,
zu erhalten, wobei
die Polyole B ein Spaltprodukt des Polyurethanschaumstoffs des Verschnittes als Umsetzungsprodukt mit dem Aminoalkohol sind; und
e) das Zurückführen zumindest eines Anteils des Rezyklat-Gemisches in Schritt a).

2. Verfahren nach Anspruch 1, wobei der Polyurethanschaumstoff-Körper eine Matratze, eine Schuhsole, ein Lenkrad, ein Integralschaumkörper oder ein Sandwichpaneel ist, insbesondere eine Matratze.

3. Verfahren nach Anspruch 1 oder 2, wobei der Verschnitt aus einem oder mehreren Mitgliedern der Gruppe: Abschnitte des Polyurethanschaumstoff-Körpers, Sägemehl das beim Schneiden oder Sägen des Polyurethanschaumstoff-Körpers anfällt, überschüssig eingespritztes Material, welches aus einer Mould austritt, Anfahrblöcke und Fehlproduktionen besteht.

4. Verfahren nach zumindest einem der vorhergehenden Ansprüche, wobei der Polyurethanschaumstoff-Körper eine Dichte von 10 bis 600 kg/m³, bevorzugt 20 bis 300 kg/m³, besonders bevorzugt 20 bis 100 kg/m³ aufweist.

5. Verfahren nach zumindest einem der vorhergehenden Ansprüche, wobei das Rezyklat-Gemisch mit 5 bis 50 Gew.%, insbesondere 20 bis 30 Gew.%, relativ zum als Rohstoff eingesetzten Polyol A eingesetzt wird und/oder wobei in Schritt a) das Gewichtsverhältnis von Polyol A relativ zu Polyol B 20 zu 1 bis 1 zu 1 ausmacht.

6. Verfahren nach zumindest einem der vorhergehenden Ansprüche,
wobei das Gewichtsverhältnis Depolymerisations-Gemisch mit zugesetztem Polyol A, zu Verschnitt 1 : 10 bis 1 : 1 beträgt und/oder
wobei das Gewichtsverhältnis Depolymerisations-Gemisch ohne zugesetztes Polyol A, zu Verschnitt 1 : 24 bis 1 : 5 beträgt und/oder.
wobei das Gewichtsverhältnis von Aminoalkohol zu Verschnitt 1: 24 bis 1 : 5 beträgt.

7. Verfahren nach zumindest einem der vorhergehenden Ansprüche, wobei die Konzentration des tertiären Amins als Katalysator im Depolymerisations-Gemisch, d.h. ohne Verschnitt, 0,1 bis 6 Gew.% oder 1 bis 30 Gew.%, jeweils bezogen auf das Depolymerisations-Gemisch beträgt.

8. Verfahren nach zumindest einem der vorhergehenden Ansprüche, wobei die Depolymerisation bei Temperaturen von 170 bis 185°C, insbesondere 170°C bis 180°C erfolgt.

9. Verfahren nach zumindest einem der vorhergehenden Ansprüche, wobei der Verschnitt zerkleinert und/oder kompaktiert wird und insbesondere zumindest teilweise in Form von Flocken in Schritt d) eingesetzt wird.

10. Verfahren nach zumindest einem der vorhergehenden Ansprüche, wobei der Verschnitt in einer Verschnittzufuhr komprimiert in einen Rührreaktor zugeführt wird, z.B. über eine Stopfschnecke, wobei der komprimierte Verschnitt als Sperre für das Austreten von Gasen aus dem Reaktor über die Verschnittzufuhr wirkt und wobei der Verschnitt vor oder während der Komprimierung vorzugsweise mit Depolymerisations-Gemisch und ggf. zusätzlich Polyol A benetzt bzw. besprüht wird.

11. Verfahren nach zumindest einem der vorhergehenden Ansprüche, wobei das Rezyklat-Gemisch zumindest folgende Komponenten umfasst:
i) Polyol B, das ein Umsetzungsprodukt des Aminoalkohols mit zumindest einer Urethan-Gruppe des Polyurethans ist,
ii) durch Depolymerisation freigesetzte Polyole A und
iii) zusätzlich zugesetzte Polyole A,
wobei ii) und iii) chemisch gleich sind.

12. Verfahren nach zumindest einem der vorhergehenden Ansprüche, wobei das Rezyklat-Gemisch eine Dispersion enthaltend nanoskalige Teilchen ist und die mittlere Teilchengröße 20 bis 500 nm beträgt.

13. Verfahren nach zumindest einem der vorhergehenden Ansprüche, wobei das Polyol A ein Polymerpolyol auf PIPA- (Poly-Isocyanat Poly-Addition), PHD- (Polyharnstoff-Dispersion), SAN- (Styrol-Acrylnitril) oder PS-(Polystyrol) Basis enthaltend PIPA- , PHD-, SAN- und/oder PS-Teilchen und das Rezyklat-Gemisch die PIPA-, PHD-, SAN- und/oder PS- Teilchen in einem homogen dispergierten Zustand enthält.

14. Verfahren nach zumindest einem der vorhergehenden Ansprüche, wobei der Aminoalkohol eine primäre oder sekundäre Aminogruppe, eine Hydroxygruppe und vorzugsweise 2 bis 6 Kohlenstoffatome und ggf. Sauerstoff aufweist; und/oder
wobei das tertiäre Amin ein Diaza-/Triaza-Bicycloalkan, ein Diaza-/Triaza-Bicycloalken, ein C2- oder C3- Alkyl-Dimethylamin, C1- bis C6-N,N'-Alkyl-Piperazin sowie C1-bis C6-N-Alkyl-Imidazol oder ein C1- bis C6-Hydrodxy-N-alkyl-Imidazol ist, wobei die Alkylimidazole auch C1- bis C6-Alkyl-Gruppen an einem Kohlenstoffatom des Imidazol-Rings tragen können.

15. Verfahren nach zumindest einem der vorhergehenden Ansprüche, wobei das Rezyklat-Gemisch weiterhin Epoxy-Verbindungen, Säureanhydride und/oder Carbonsäuren zur Umsetzung mit etwaigen primären oder sekundären Aminogruppen enthält.

16. Polyurethanschaumstoff-Körper oder Polyurethanschaumstoff herstellbar nach einem Verfahren nach zumindest einem der Ansprüche 1 bis 15.
